# EUROPEAN PATENT APPLICATION

(11) **EP 1 273 950 A2**
(43) Date of publication of application: **08.01.2003**
(21) Application number: 02396089.1
(22) Date of filing: 13.06.2002
(51) Int. Cl.: G02B 15/10

(54) **Focusing method for a camera and a camera**

(30) Priority: 15.06.2001 FI 20011272
(71) Applicant: Nokia Corporation, 02150 Espoo (FI)
(72) Inventor: Ojala, Kai, 90800 Oulu (FI)
(74) Representative: Kupiainen, Juhani

(57) **Abstract**

The invention relates to a focusing method for a camera and camera where the lens system (10) is attached in a fixed manner to the body (14) of the camera at a fixed distance from the photosensitive surface (12) of the camera. Rays of light (S) coming from a target to be photographed are focused onto the photosensitive surface by placing between the lens system (10) and photosensitive surface one or more focusing plate(s) (16) made of a material that lets light pass through and the both surfaces of which are flat. The focusing plate is made of a material the index of refraction of which is greater than one, whereby rays of light will be refracted at the surfaces of the plate as they travel through the focusing plate. Refraction of the rays of light changes their course of propagation, which makes it possible to focus the camera to different ranges. The focusing plate is attached to the camera in a movable manner so that it can be moved between the lens and the photosensitive surface whenever required in order to focus the camera accurately. The focusing plates may have the same thickness throughout or they may become thinner towards one end. In an advantageous embodiment of the invention the camera includes an actuator for moving the focusing plates.

## Description

The invention relates to a method for focusing rays of light traveling through the lens of a camera onto a photosensitive surface, in which method the lens and photosensitive surface are at a fixed distance from one another. The invention further relates to a camera comprising a body and, within the body, a photosensitive surface and a lens system attached to the body at a fixed distance from the photosensitive surface.

The essential functional components of a normal analog camera are the lens system, aperture, shutter, viewfinder and naturally the film on which the image of the target is recorded. The shutter of the camera is opened for a brief moment when the release mechanism is activated, whereby rays of light will travel through the camera's lens system, aperture and open shutter onto the photosensitive film. The image created by the rays of light is recorded on the film through chemical reactions that take place in the surface layers of the film. The amount of light hitting the film is controlled by changing the size of the aperture of the camera, and the camera is pointed to the target using the viewfinder. The sharpness and clarity of the image depends to a great extent on the lens system the purpose of which is to refract and focus the rays of light in a controlled manner onto the surface of the film. In principle, only one lens is needed in the lens system, but in order to achieve a high-quality picture the lens system is often implemented using several lenses placed in succession.

Focusing is done by adjusting the distance between the lens system and the image. Usually a lens system is focused by turning the focusing ring placed on the outer surface thereof, whereby the lens system is moved towards the film or away from it. In more advanced cameras, focusing is done automatically by a motor that moves the lens system. In cheaper and simpler cameras the lens system is installed in the camera in a fixed manner and pre-focused to a range which is thought to be the most often used.

In digital cameras, the image is not recorded on film but on an optical sensor comprised of photosensitive elements, the optical sensor converting the rays of light directed to the surface of the sensor directly into digital signals. These signals are processed by software in the camera and stored in the camera's memory. Optical sensors most often used are either charge coupled devices (CCD) or optical CMOS (complementary metal oxide semiconductor) chips. The lens system in a digital camera is basically quite identical with that of an analog camera, and focusing the rays of light onto the chip follows the same principle as in analog cameras.

There are several disadvantages associated with prior-art cameras and especially with focusing the image. Focusing an image by moving the lens system requires a complex mechanism which increases manufacturing costs. Moreover, a movable lens system adds to the size and weight of the camera. Big size is a drawback especially in cameras installed in portable terminals such as mobile phones.

Cameras in which the lens system is attached to the body of the camera in a fixed manner, are simple and lightweight. These cameras, however, cannot be focused, so depending on the range of the target, the image will be more or less blurred.

An object of the invention is to introduce a new method for focusing a camera. Another object of the invention is to introduce a camera applying a novel focusing method.

A method and camera according to the invention are characterized in that which is specified in the independent claims. Advantageous embodiments of the invention are specified in the dependent claims.

In a method and camera according to the invention, the lens system of the camera is attached in a fixed manner to the body of the camera at a fixed distance from a photosensitive surface found inside the body of the camera. The basic idea of the invention is that the rays of light coming from the target are focused accurately onto the photosensitive surface by placing one or more focusing plate(s) made of a transparent material between the lens and the photosensitive surface. Both surfaces of the focusing plate are flat, in other words it is not a lens ground into convex or concave shape. The focusing plate is made of a material the index of refraction of which is greater than one, whereby rays of light will be refracted at the surfaces of the plate as they travel through the focusing plate. Refraction of the rays of light changes their course of propagation, which makes it possible to focus the camera to different ranges. The focusing plate is attached to the camera in a movable manner so that it can be moved between the lens system and photosensitive surface whenever required in order to focus the camera accurately. The camera may be implemented e.g. such that when taking close-up pictures the image will be focused onto the photosensitive surface by means of the lens system without the focusing plate, and conversely, when taking pictures of distant objects the focusing plate will be placed between the lens system and photosensitive surface.

In an advantageous embodiment of the invention the camera includes an actuator for moving the focusing plates. The actuator is advantageously an electric motor.

In another advantageous embodiment of the invention the focusing plates have a wedgelike cross section, i.e. they become thinner towards one end. Two overlapping wedgelike focusing plates facilitate stepless focusing in the camera.

An advantage of the method according to the invention is that it can be used to substantially improve focusing characteristics in cameras where the lens system is attached in a fixed manner to the body of the camera. Thus the picture-taking characteristics of the camera are improved.

An advantage of the camera according to the invention is that it is technically simple and reliable. The lens system of the camera and the photosensitive surface can be attached in a fixed manner to the body of the camera so that the camera will be structurally durable. At its simplest, focusing the camera requires only one movable focusing plate the back-and-forth movement of which can be easily realized within the camera.

Another advantage of the invention is that because of the simple structure, the camera can be made very small so that it is especially suitable to be installed in portable terminals such as mobile phones.

The invention is below described in detail. The description refers to the accompanying drawings in which
Figs. 1a and 1b schematically illustrate as an example a camera and focusing method according to the invention,
Fig. 2 schematically illustrates as an example the propagation of rays of light inside the camera,
Fig. 3 schematically illustrates as an example an advantageous embodiment of a camera according to the invention, and
Fig. 4 schematically illustrates as an example another advantageous embodiment of a camera according to the invention.

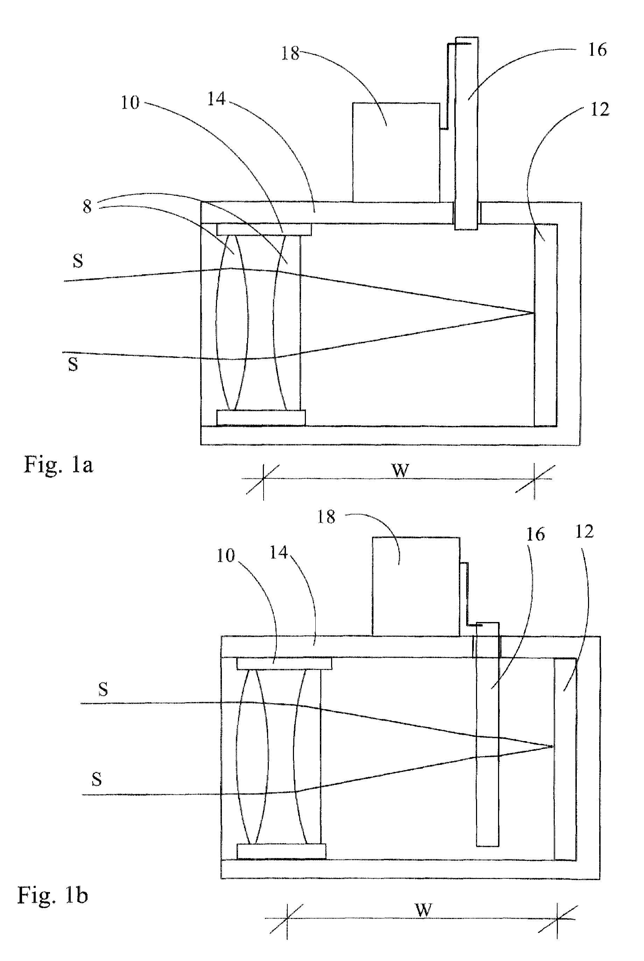

Figs. 1a and 1b schematically illustrate, as an example, the operating principle of a focusing method and camera according to the invention. A camera according to the invention has a body 14 and a lens system 10 attached in a fixed manner thereto.

Rays of light reflected from the target travel through the lens system inside the body of the camera. The lens system may comprise several successive lenses 8 or just one single lens. Inside the body there is a photosensitive surface 12 on which the picture is recorded. The photosensitive surface may be e.g. a film placed against the rear end of the body so that an image is recorded on the film in a chemical reaction. Advantageously the photosensitive surface is a so-called optical sensor which converts the rays of light striking the surface of the sensor directly into digital signals. The optical sensor may be either a CCD chip or an optical CMOS chip or some other chip comprising photosensitive elements. The camera may comprise other parts, too, such as an aperture, viewfinder and a shutter release. However, as these parts are irrelevant to the present invention, they are not depicted in the drawings.

The camera according to the invention is a so-called fixed-focus camera in which the lens system 10 and photosensitive part 12 are attached to the body of the camera at a fixed distance W from one another. Traditionally, a problem with such cameras has been that when taking a picture, the camera cannot be focused according to the range of the target but, instead, the camera is pre-focused to an "average" range thought to be the most commonly used. The target is depicted accurately on the photosensitive surface only when it is at a suitable distance in front of the lens system, i.e. within the so-called depth-of-field range. Outside this range the pictures will be more or less blurred. So, if the depth of field is set for distant objects the camera cannot be used for taking sharp close-ups. Conversely, if the depth of field is set for close-ups the camera cannot be used for taking sharp pictures of distant objects.

In the camera according to the invention the focusing of the rays of light coming from the target onto the photosensitive surface is realized using a focusing plate 16 placed between the lens system 10 and photosensitive surface 12. The focusing plate is a planar element the both surfaces of which are flat and which is placed between the lens system and photosensitive surface so that the rays of light coming from the target will travel through it. The focusing plate is made of a material which lets light pass through and the index of refraction of which is greater than one. Advantageously the focusing plate is made of glass or transparent plastic. The focusing plate is attached to the body 14 of the camera in a movable manner so that it can be placed between the lens system and photosensitive surface when focusing requires, and be removed when not required for focusing. In the advantageous embodiment of the invention illustrated in Figs. 1a and 1b the focusing plate is attached to the body of the camera using a sliding mechanism, and the camera includes an actuator 18 for moving the focusing plate. The actuator may be a simple mechanical lever or advantageously an electric or piezoelectric motor.

Fig. 1a illustrates the operation of the camera according to the invention in a situation where the target to be photographed is very close to the camera. The lens system 10 and photosensitive surface 12 in the camera according to the invention are attached at such a distance from each other that the depth of field of the camera is suitable for taking close-up pictures. Rays of light S coming from the target are refracted in the individual lenses so that the image is depicted sharply on the photosensitive surface. So, when taking close-up pictures, the focusing plate 16 is not required and, therefore, it is moved away from the path of propagation of the rays of light.

Fig. 1b illustrates the camera according to the invention in a situation where the camera is used to take photographs of distant objects. In this case, the focusing plate 16 is moved between the lens system 10 and photosensitive surface 12 of the camera. Without the focusing plate the lens system of the camera would direct the rays of light S traveling therethrough in front of the photosensitive surface so that the image would be blurred, i.e. out of focus. With the focusing plate, the rays of light will be refracted at the interfaces of air and the plate, changing the direction of the rays of light. Because of refraction, the path of the rays of light coming from the target is changed and the rays of light are again sharply focused on the photosensitive surface.

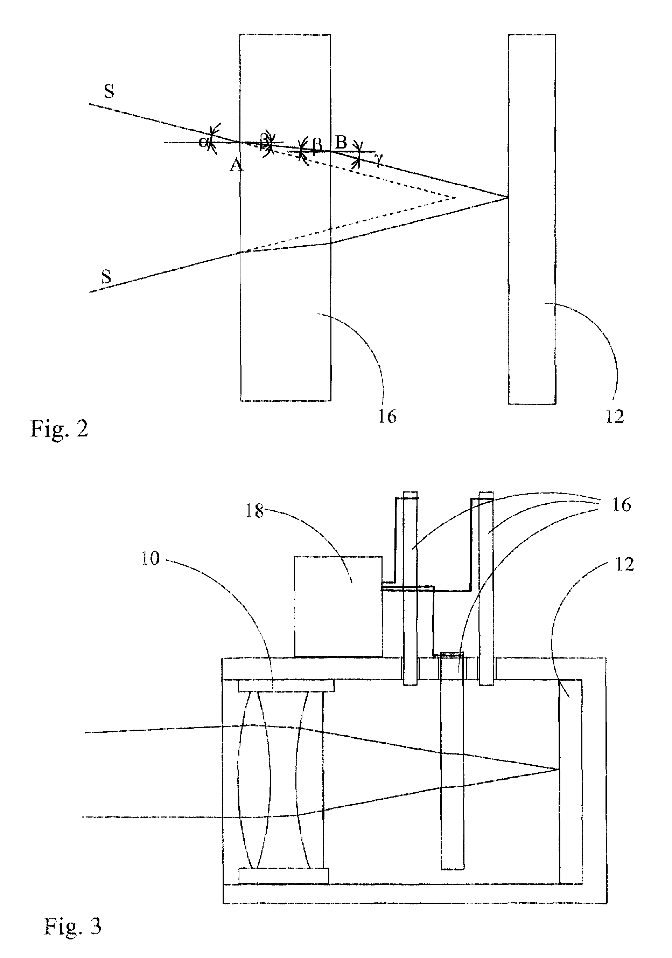

Fig. 2 depicts the path of rays of light coming from the target through the focusing plate 16 onto the photosensitive surface 12. A ray of light arriving through the lens system strikes the surface of the focusing plate 16 at point A at an angle α with the normal to the surface. In accordance with the law of refraction, when a ray of light travels from an optically less dense matter into a more dense matter, it is refracted towards the normal of the interface. Since the index of refraction of the focusing plate is greater than that of air, angle β will be smaller than angle α. The refracted ray of light continues its journey through the focusing plate and arrives at a second interface at point B. At this interface the ray of light is refracted towards the normal, making an angle γ with the normal, which angle is equal to angle α.

Fig. 2 shows in dashed line the paths of the rays of light when the focusing plate is not used. The figure clearly shows how the lens system of the camera would direct the rays of light coming from a distant target in front of the photosensitive surface, thus making the image blurred, i.e. out of focus. The focusing plate produces a parallel displacement in light rays S at the focusing plate, resulting in that the light rays are accurately focused on the photosensitive surface 12. The magnitude of the parallel displacement depends on the thickness and refractive index of the focusing plate as well as on the incident angle of the light rays. With a suitable thickness and material of the focusing plate the camera can be focused to any range. Since the focusing plate is a slab the both surfaces of which are straight (in other words, it is not a lens with a convex or concave surface), relatively large tolerances can be allowed for the placement of the focusing plate between the lens system and photosensitive surface. Therefore, the mechanism and actuator used for moving the focusing plate can be made comparatively simple.

By selecting a suitable size for the lens and photosensitive surface and by other technical means it is possible to considerably increase the sharp focus area perceivable to the human eye. Thus it often suffices that the camera can be set roughly to two different picture-shooting ranges; close-up pictures and pictures of distant objects. In the method and camera according to the invention, this can be easily achieved with a single movable focusing plate 16. For pictures taken at a distance the focusing plate is moved into its place between the lens system and photosensitive surface 12 and, conversely, for close-up pictures, the focusing plate is moved away from between the lens system and photosensitive surface. When the moving of the focusing plate is arranged so as to be realized by means of an actuator 18, the user of the camera is able to focus the camera correctly with just one push of a button controlling the actuator.

Fig. 3 schematically illustrates as an example another advantageous embodiment of the method and camera according to the invention. In this embodiment the camera includes a plurality of focusing plates 16 movable by an actuator 18 so that the focusing plates can be moved between the lens system and photosensitive surface if necessary on the basis of the range of the object to be photographed. The focusing plates may be of equal or different thickness and of the same or different material. Using several focusing plates the image can be made very sharp at many different picture-shooting ranges.

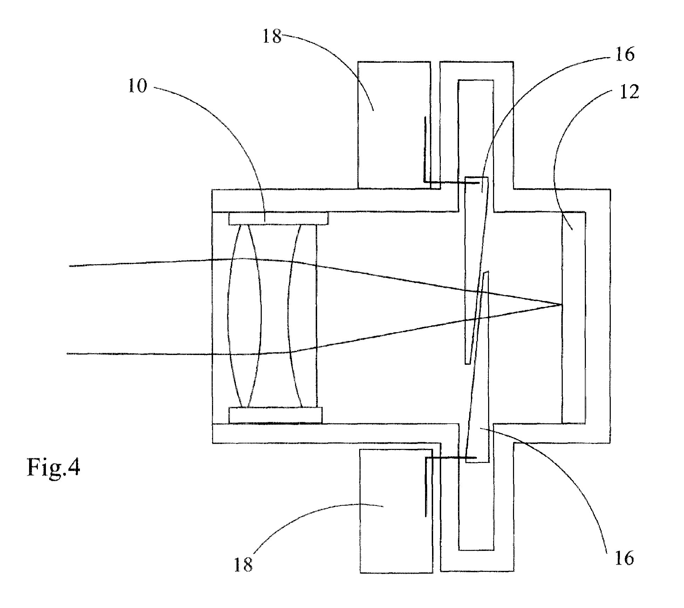

Fig. 4 schematically shows as an example yet another advantageous embodiment of the method and camera according to the invention. In this embodiment the camera comprises two focusing plates 16 which at a first end are clearly thicker than at a second end, i.e. the plates grow evenly thinner towards the second end. The focusing plates are movably attached to opposite sides of the body 14 of the camera so that their thinner ends point to one another. The focusing plates can be moved by an actuator 18 towards each other so that they overlap in the path of the light rays. In this embodiment, the total thickness of the plate set comprised of two overlapping focusing plates can be changed steplessly so that the camera can be focused to any range.

The focusing method according to the invention finds particular utility in very small digital cameras which, because of the compactness of the apparatus, advantageously utilize a lens system attached in a fixed manner to the body of the camera. Such compact cameras may be installed e.g. in portable terminals such as mobile phones. In these cameras the photosensitive surface is an optical sensor comprised of photosensitive elements, e.g. a so-called CCD chip or advantageously an optical CMOS sensor. The lens system of a compact camera may advantageously comprise just one lens. The lens and optical sensor are advantageously only a few millimeters in size, whereby the focusing plate inserted between the lens and sensor may be a few millimeters in diameter. In such a camera, however, the distance between the lens and sensor is so wide that at least one to two about half-millimeter-thick movable focusing plates can be installed. If top-quality photographic characteristics are not required, an adequate focusing capacity can be reached with one focusing plate only. The focusing method according to the invention may also be used in other cameras such as conventional digital or analog cameras or video camcorders intended for photography.

Above it was described some advantageous embodiments of the focusing method and camera according to the invention. The invention is not limited to the solutions described above but the inventional idea may be applied in numerous ways within the scope defined by the appended claims.

## Claims

1. A method for focusing rays of light (S) traveling through the lens system (10) of a camera onto a photosensitive surface (12), in which method the lens system and photosensitive surface are at a fixed distance (W) from each other, **characterized in that** the path of the rays of light is changed by placing between the lens system and photosensitive surface at least one focusing plate (16) which is made of a material that lets light pass through and the both surfaces of which are flat and the index of refraction of which is greater than one.

2. A method according to claim 1, **characterized in that** a glass plate is placed between the lens system (10) and photosensitive surface (12).

3. A method according to claim 1 or 2, **characterized in that** a focusing plate (16) which has essentially a constant thickness throughout is placed between the lens system (10) and photosensitive surface (12).

4. A method according to claim 1 or 2, **characterized in that** a focusing plate (16) which is wedgelike in cross section, i.e. one end of which is thinner than the other, is placed between the lens system (10) and photosensitive surface (12).

5. A method according to any one of claims 1 to 4, **characterized in that** the focusing plate (16) is moved into place by an actuator (18).

6. A method according to claim 5, **characterized in that** the focusing plate (16) is moved into place by an electric motor.

7. A method according to any one of claims 1 to 6, **characterized in that** the focusing plate (16) is placed between the lens system (10) and film.

8. A method according to any one of claims 1 to 6, **characterized in that** the focusing plate (16) is placed between the lens system (10) and an optical sensor comprised of photosensitive elements.

9. A method according to claim 8, **characterized in that** the focusing plate (16) is placed between the lens system (10) and a CCD chip.

10. A method according to claim 8, **characterized in that** the focusing plate (16) is placed between the lens system (10) and an optical CMOS sensor.

11. A camera having a body (14), a photosensitive surface (12) within the body, and a lens system (10) attached to the body at a fixed distance (W) from the photosensitive surface, **characterized in that** in order to change the path of rays of light (S) there is placed between the lens system and photosensitive surface at least one movable focusing plate (16) the both surfaces of which are flat and which is made of a material that lets light pass through and the index of refraction of which is greater than one.

12. A camera according to claim 11, **characterized in that** the focusing plate (16) is made of a glass material.

13. A camera according to claim 11 or 12, **characterized in that** the focusing plate (16) has essentially a constant thickness throughout.

14. A camera according to claim 11 or 12, **characterized in that** the focusing plate (16) has a wedgelike cross section, i.e. one end thereof is thinner than the other.

15. A camera according to any one of claims 11 to 14, **characterized in that** the camera includes at least one actuator (18) for moving the focusing plate (16).

16. A camera according to claim 15, **characterized in that** the actuator (18) is an electric motor.

17. A camera according to any one of claims 11 to 16, **characterized in that** the photosensitive surface (12) is film.

18. A camera according to any one of claims 11 to 16, **characterized in that** the photosensitive surface (12) is an optical sensor comprised of photosensitive elements.

19. A camera according to claim 18, **characterized in that** the photosensitive surface (12) is a CCD chip.

20. A camera according to claim 18, **characterized in that** the photosensitive surface is an optical CMOS sensor.

21. A camera according to any one of claims 11 to 20, **characterized in that** the camera is installed in a portable terminal such as a mobile phone.
